# EUROPÄISCHE PATENTSCHRIFT

(11) **EP 1 988 323 B1**
(45) Veröffentlichungstag und Bekanntmachung des Hinweises auf die Patenterteilung: **18.05.2011**
(21) Anmeldenummer: 08103011.6
(22) Anmeldetag: 27.03.2008
(51) Int. Cl.: F16L 37/098, B60K 15/03

(54) **Zur Montage innerhalb eines Kraftstoffbehälters vorgesehene Kraftstoffpumpe mit einem Adapter**
Fuel pump for installation inside a fuel container with an adapter
Pompe à carburant à monter à l'intérieur d'un réservoir de carburant dotée d'un adaptateur

(30) Priorität: 04.05.2007 DE 102007021026
(43) Veröffentlichungstag der Anmeldung: 05.11.2008
(73) Patentinhaber: Continental Automotive GmbH, 30165 Hannover (DE)
(72) Erfinder: Hagist, Dieter, 56112, Lahnstein (DE); Jeuk, Martin, 56459, Guckheim (DE); Kadler, Matthias, 64521, Gross-Gerau (DE)

(56) Entgegenhaltungen:
- EP-A- 0 536 672
- EP-A- 1 205 333
- EP-A- 1 701 079
- WO-A-01/90629
- US-A1- 2003 121 691

## Beschreibung

Die Erfindung betrifft eine zur Montage innerhalb eines Kraftstoffbehälters vorgesehene Kraftstoffpumpe mit einem Adapter zum Anschluss eines innerhalb des Kraftstoffbehälters geführten Abschnitts einer zu einer Brennkraftmaschine des Kraftfahrzeuges führenden Vorlaufleitung an der Kraftstoffpumpe und mit einer Rastverbindung zur Halterung des Adapters an einem Anschlussstutzen der Kraftstoffpumpe.

Kraftstoffpumpen mit solchen Adaptern sind bei heutigen Kraftfahrzeugen Teil einer Kraftstoff-Fördereinheit und sind aus der Praxis bekannt. Die Kraftstoffpumpe wird meist gegen einen Boden des Kraftstoffbehälters vorgespannt und über den innerhalb des Kraftstoffbehälters geführten Abschnitt der Vorlaufleitung mit einem Flansch im Kraftstoffbehälter verbunden. Zum Anschluss des innerhalb des Kraftstoffbehälters geführten Abschnitts der Vorlaufleitung an der Kraftstoffpumpe ist der Adapter mittels eines federnden Bügels der Rastverbindung in einer Nut des Anschlussstutzens gehalten. Der Adapter weist ein Tannenbaumprofil zum Aufstecken des Abschnitts der Vorlaufleitung auf.

Eine solche Fördereinheit mit solchem Adapter nach dem Oberbegriff des Anspruchs 1 ist im Dokument EP 1 205 333 offenbart.

Nachteilig bei der bekannten Kraftstoffpumpe mit dem Adapter ist jedoch, dass sich die Montage des Adapters an der Kraftstoffpumpe sehr schwierig gestaltet. Die Montage mit dem federnden Bügel der Rastverbindung erfordert zudem die vorherige Ausrichtung des Adapters gegenüber der Kraftstoffpumpe, was zur weiteren Erschwerung der Befestigung des Adapters durch eine meist nur sehr kleine Montageöffnung des Kraftstoffbehälters beiträgt.

Der Erfindung liegt das Problem zugrunde, eine Kraftstoffpumpe mit einem Adapter der eingangs genannten Art so zu gestalten, dass der Adapter besonders einfach durch eine meist sehr kleine Montageöffnung im Kraftstoffbehälter montiert werden kann.

Dieses Problem wird erfindungsgemäß durch die Merkmale des Anspruchs 1 gelöst.

Durch diese Gestaltung können die einzelnen Bauteile der Rastverbindung nicht verloren gehen. Zudem kann der Adapter an den Auslösemitteln der Rastverbindung mit einer Hand gegriffen und mit der Kraftstoffpumpe verbunden werden. Dabei lassen sich die Auslösemittel betätigen und die Rastverbindung montieren. Hierdurch lässt sich die erfindungsgemäße Kraftstoffpumpe mit dem Adapter besonders einfach, insbesondere durch eine sehr kleine Montageöffnung im Kraftstoffbehälter montieren. Eine einstückige Fertigung der Rastmittel und der Auslösemittel mit den übrigen Bereichen des Adapters ermöglicht eine besonders kostengünstige Fertigung der Bauteile aus Kunststoff in einer einzigen Spritzgussform.

Die Bewegung der Rastmittel von der verrasteten Stellung in die gelöste Stellung gestaltet sich gemäß einer vorteilhaften Weiterbildung der Erfindung besonders komfortabel, wenn die Auslösemittel und die Rastmittel ein mittig gehaltenes Wippelement aufweisen und wenn an einem Ende des Wippelementes die Rastmittel hakenförmig abstehen und an dem anderem Ende des Wippelementes die Auslösemittel angeordnet sind und wenn das Wippelement federelastisch in die verrastete Stellung des Adapters mit dem Anschlussstutzen vorgespannt ist. Durch diese Gestaltung lassen sich durch Niederdrücken der Auslösemittel die hakenförmigen Rastmittel einfach verschwenken und aus dem Eingriffsbereich des Anschlussstutzens heraus bewegen.

Die Position der Auslösemittel ist von Hand ertastbar und verändert sich in Abhängigkeit von der Stellung der Rastmittel. Daher ist die Qualität der Verbindung des Adapters mit dem Anschlussstutzen einfach zu ertasten. Vorzugsweise erfolgt die federelastische Vorspannung in die verrastete Stellung durch Eigenelastizität des Wippelementes und/oder einer Halterung des Wippelementes an dem Adapter.

Die Kraftstoffpumpe gestaltet sich gemäß einer anderen vorteilhaften Weiterbildung der Erfindung konstruktiv besonders einfach, wenn die Rastmittel einen Absatz an der Kraftstoffpumpe hintergreifen. Wenn eine Verdrehbarkeit des Adapters gewünscht ist, kann der Absatz um den Anschlussstutzen der Kraftstoffpumpe umlaufend gestaltet sein.

Die Rastverbindung des Adapters an dem Anschlussstutzen weist gemäß einer anderen vorteilhaften Weiterbildung der Erfindung eine besonders hohe Stabilität auf, wenn zwei Rastmittel jeweils ein Auslösemittel aufweisen und auf einander gegenüberstehenden Seiten des Anschlussstutzens eingreifen.

Die Verbindung der Vorlaufleitung mit der Kraftstoffpumpe gestaltet sich gemäß einer anderen vorteilhaften Weiterbildung der Erfindung besonders kompakt, wenn der Adapter einen vertikalen Schenkel zur Verbindung mit dem Anschlussstutzen und einen horizontalen Schenkel zur Verbindung mit der Vorlaufleitung hat. Diese Gestaltung ist insbesondere bei heutigen, meist sehr niedrigen Kraftstoffbehältern von Vorteil, da bei einer geraden Gestaltung des Adapters meist kein Bauraum für die Führung der Vorlaufleitung zur Verfügung steht.

Die Auslösemittel sind gemäß einer anderen vorteilhaften Weiterbildung der Erfindung besonders einfach zugänglich, wenn sie bis über den horizontalen Schenkel geführt sind.

Die Anzahl der im Kraftstoffbehälter zu montierenden Bauteile lässt sich gemäß einer anderen vorteilhaften Weiterbildung der Erfindung besonders gering halten, wenn der Adapter und ein Rückschlagventil und/oder ein Druckbegrenzungsventil als bauliche Einheit ausgebildet sind. Ein weiterer Vorteil dieser Gestaltung besteht darin, dass durch einen einfachen Austausch der den Adapter aufweisenden baulichen Einheit eine hohe Flexibilität der Kraftstoffförderung sichergestellt werden kann. Die Anzahl der Varianten der für unterschiedliche Einsatzzwecke vorgesehenen Kraftstoffpumpen lässt sich besonders gering halten, da es meist genügt, die bauliche Einheit mit dem Rückschlagventil und dem Druckbegrenzungsventil für den Einsatzzweck entsprechend anzupassen. Dies führt zu geringen Kosten der Kraftstoffpumpe.

Der Adapter gestaltet sich gemäß einer anderen vorteilhaften Weiterbildung der Erfindung konstruktiv besonders einfach, wenn das Rückschlagventil und das Druckbegrenzungsventil in dem horizontalen Schenkel des Adapters angeordnet sind.

Zur Vereinfachung der Montage des Rückschlagventils und des Druckbegrenzungsventils in dem Adapter trägt es gemäß einer anderen vorteilhaften Weiterbildung der Erfindung bei, wenn an einem Ende des horizontalen Schenkels das Rückschlagventil und an dem anderem Ende das Druckbegrenzungsventil angeordnet ist. Durch diese Gestaltung lässt sich das Rückschlagventil von einem Ende in den horizontalen Schenkel und das Druckbegrenzungsventil von dem anderen Ende in dem horizontalen Schenkel einsetzen.

Zur Verringerung der Anzahl der Bauteile des Adapters trägt es gemäß einer anderen vorteilhaften Weiterbildung der Erfindung bei, wenn der horizontale Schenkel einen als Ventilsitz ausgebildeten Absatz zur Abstützung eines Ventilkörpers hat.

Die Erfindung lässt zahlreiche Ausführungsformen zu. Zur weiteren Verdeutlichung ihres Grundprinzips sind mehrere davon in der Zeichnung dargestellt und werden nachfolgend beschrieben. Diese zeigt in
- Fig. 1: eine Kraftstoff-Versorgungsanlage für ein Kraftfahrzeug mit einer erfindungsgemäßen Kraftstoffpumpe und mit einem Adapter,
- Fig. 2: den Adapter aus Figur 2 mit angrenzenden Bereichen der Kraftstoffpumpe in einem Teilschnitt,
- Fig. 3: den Adapter aus Figur 1 in einer perspektivischen Darstellung,
- Fig. 4: eine Schnittdarstellung durch den Adapter aus Figur 3,
- Fig. 5: eine Schnittdarstellung durch eine weitere Ausführungsform des Adapters,
- Fig. 6: eine Schnittdarstellung durch eine weitere Ausführungsform des Adapters.

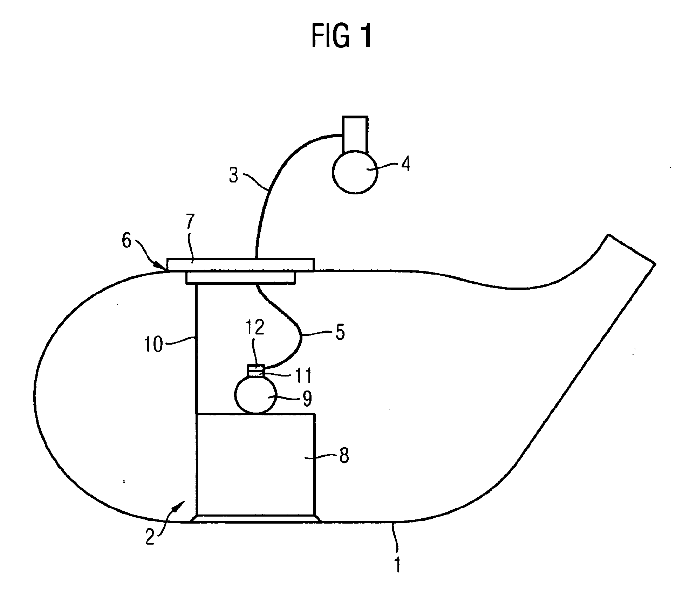

Figur 1 zeigt eine Kraftstoffversorgungsanlage für ein Kraftfahrzeug mit einer in einem Kraftstoffbehälter 1 angeordneten Kraftstoff-Fördereinheit 2. Die Kraftstoff-Fördereinheit 2 ist über eine Vorlaufleitung 3 mit einer Brennkraftmaschine 4 des Kraftfahrzeuges verbunden. Die Vorlaufleitung 3 weist einen innerhalb des Kraftstoffbehälters 1 angeordneten Abschnitt 5 auf und ist durch einen in einer Montageöffnung 6 eingesetzten Flansch 7 geführt. Die Kraftstoff-Fördereinheit 2 weist einen gegen einen Boden des Kraftstoffbehälters 1 vorgespannten Schwalltopf 8 auf und hat eine in dem Schwalltopf 8 angeordnete Kraftstoffpumpe 9. Der Schwalltopf 8 ist über Teleskopelemente 10 mit dem Flansch 7 verbunden. Die Kraftstoffpumpe 9 weist einen Anschlussstutzen 11 auf, gegenüber dem ein Adapter 12 abgedichtet ist. An dem Adapter 12 ist der innerhalb des Kraftstoffbehälters 1 angeordnete Abschnitt 5 der Vorlaufleitung 3 angeschlossen.

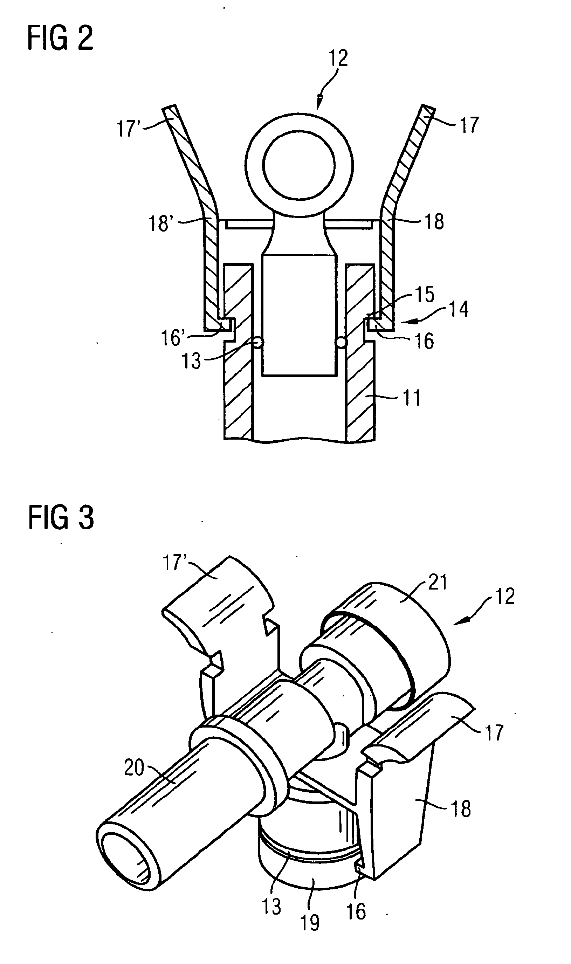

Figur 2 zeigt den Adapter 12 und den Anschlussstutzen 11 der Kraftstoffpumpe 9 aus Figur 1 im Teilschnitt. Der Adapter 12 und der Anschlussstutzen 11 sind über eine Radialdichtung 13 gegeneinander abgedichtet und mittels einer Rastverbindung 14 miteinander verbunden. Die Rastverbindung 14 weist einen in dem Anschlussstutzen 11 angeordneten umlaufenden Absatz 15 auf, welcher von zwei hakenförmigen Rastmitteln 16, 16' des Adapters 12 hintergriffen wird. Die Rastmittel 16, 16' sind jeweils einstückig mit Auslösemitteln 17, 17' auf mittig gehaltenen Wippelementen 18, 18' angeordnet. Die Wippelemente 18, 18' sind einstückig mit den übrigen Bereichen des Adapters 12 gefertigt. Jeweils zwei Rastmittel 16, 16' und zwei Auslösemittel 17, 17' stehen einander gegenüber. Durch Zusammendrücken der Auslösemittel 17, 17' werden die Wippelemente 18, 18' um ihre mittige Halterung verschwenkt, so dass sich die Rastmittel 16, 16' von einer mit dem Anschlussstutzen 11 verrasteten Stellung in eine gegenüber dem Anschlussstutzen 11 gelöste Stellung bewegen lassen. Durch Eigenelastizität federn die Wippelemente 18, 18' in die Stellung zurück, in der die Rastmittel 16, 16' den Absatz 15 hintergreifen. Hierfür ist kein Werkzeug erforderlich. Durch Fühlen der Positionen der Auslösemittel 17, 17' lässt sich zudem feststellen, ob die Rastverbindung 14 wie vorgesehen eingerastet ist.

Figur 3 zeigt den Adapter 12 aus Figur 2 in einer perspektivischen Darstellung. Der Adapter 12 weist einen vertikalen, in den Anschlussstutzen 11 aus Figur 2 eindringenden Schenkel 19 und einen horizontalen, zum Anschluss des innerhalb des Kraftstoffbehälters 1 angeordneten Abschnitts 5 der Vorlaufleitung 3 vorgesehenen Schenkel 20 auf. Zur Vereinfachung der Zeichnung ist der innerhalb des Kraftstoffbehälters 1 angeordnete Abschnitt 5 der Vorlaufleitung 3 hier nicht dargestellt. Die Vorlaufleitung 3 kann auf das eine Ende des horizontalen Schenkels 20 des Adapters 12 aufgesteckt oder einstückig mit diesem gefertigt werden. Vorzugsweise ist der innerhalb des Kraftstoffbehälters 1 angeordnete Abschnitt 5 der Vorlaufleitung 3 als Wellrohr ausgebildet. Auf dem anderen Ende des horizontalen Schenkels 20 ist eine Kappe 21 angeordnet. An dem vertikalen Schenkel 19 ist zudem die Radialdichtung 13 angeordnet.

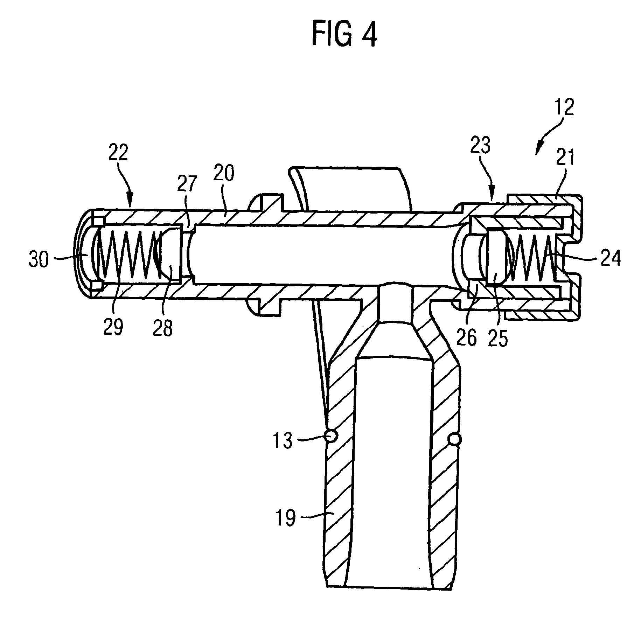

Figur 4 zeigt in einer Schnittdarstellung durch den Adapter 12 aus Figur 3, dass in dem horizontalen Schenkel 20 ein Rückschlagventil 22 und ein Druckbegrenzungsventil 23 angeordnet sind. Das Rückschlagventil 22 ist in dem zum Anschluss für die zwei Vorlaufleitungen 3 vorgesehenen Ende des horizontalen Schenkels 20 angeordnet. Die Kappe 21 ist Teil des am anderen Ende des horizontalen Schenkels 20 angeordneten Druckbegrenzungsventils 23 und stützt ein Federelement 24 ab, welches einen Ventilkörper 25 gegen einen in dem horizontalen Schenkel 20 eingepressten Ventilsitz 26 vorspannt. Der horizontale Schenkel 20 weist für das Rückschlagventil 22 einen Absatz 27 als Ventilsitz auf. Gegen den Absatz 27 ist ein Ventilkörper 28 mittels eines Federelementes 29 vorgespannt. Das Federelement 29 stützt sich an einer in dem horizontalen Schenkel 20 eingepressten Klammer 30 ab.

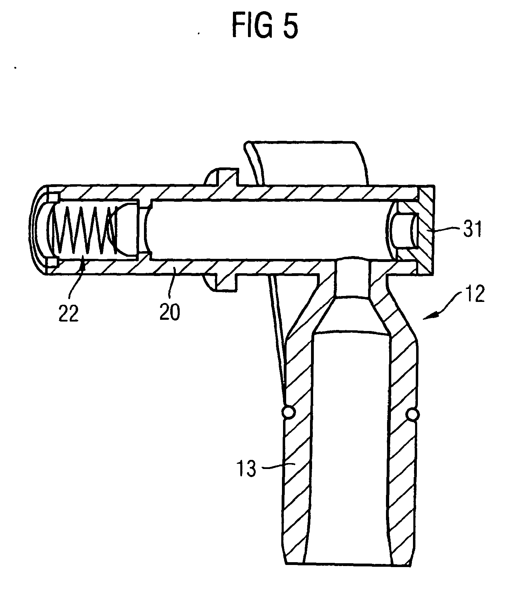

Figur 5 zeigt eine weitere Ausführungsform des Adapters 12 aus Figur 1 in einer Schnittdarstellung, welcher sich von dem aus Figur 4 nur dadurch unterscheidet, dass das dem Rückschlagventil 22 abgewandte Ende des horizontalen Schenkels 20 von einem Stopfen 31 verschlossen ist.

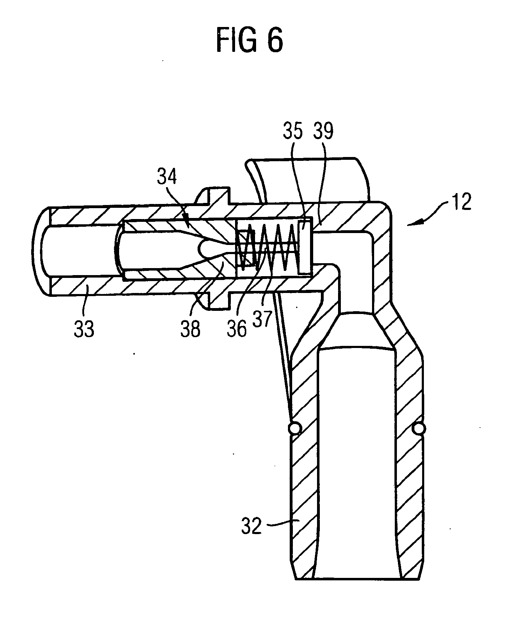

Figur 6 zeigt eine weitere Ausführungsform des Adapters 12 aus Figur 1 in einer Schnittdarstellung, bei der ein vertikaler Schenkel 32 gegenüber einem horizontalen Schenkel 33 abgewinkelt ist. Ein Rückschlagventil 34 weist eine Elastomerdichtung 35 auf, gegen welche ein Stößel 36 mittels eines Federelementes 37 vorgespannt ist. Der Stößel 36 ist in einer in dem horizontalen Schenkel 33 eingepressten Führung 38 geführt. Die Führung 38 stützt zudem das Federelement 37 ab. Auf der dem Stößel 36 gegenüberliegenden Seite der Elastomerdichtung 35 hat der horizontale Schenkel 33 einen Absatz 39.

## Patentansprüche

1. Krafstoffpumper (9), zur Montage innerhalb eines Kraftstoffbehalters (1), mit einem Adapter (12) zum Anschluss eines innerhalb des Kraftstoffbehälters geführten Abschnitts einer zu einer Brennkraftmaschine (4) des Kraftfahrzeuges führenden Vorlaufleitung (3), an der Kraftstoffpumpe (9) und mit einer Rastverbindung (14) zur Halterung des Adapters (12) an einem Anschlussstutzen (11) der Kraftstoffpumpe (9), wobei Rastmittel (16, 16') der Rastverbindung und Auslosemittel (17, 17') zur Betätigung der Rastmittel (16, 16') einteilig mit dem Adapter (12) gefertigt sind und die Auslösemittel (17,17') von Hand von einer den Adapter (12) mit dem Anschlussstutzen (11) verrasteten Stellung in eine von dem Anschlussstutzen (11) gelöste Stellung bewegbar sind, **dadurch gekennzeichnet, dass** die Auslösemittel (17, 17') und die Rastmittel (16,16') ein mittig gehaltenes Wippelement (18, 18') aufweisen und dass an einem Ende des Wippelementes (18,18') die Rastmittel (16, 16') hakenförmig abstechen anderen Ende des Wippelementes (18, 18') die Auslösemittel (17, 17') angeordnet sind und dass das Wippelement (18, 18') federelastisch in die verrastete Stellung des Adapters (12) mit dem Anschlussstutzen (11) vorgespannt ist.

2. Kraftstoffpumpe mit einem Adapter nach Anspruch 1, **dadurch gekennzeichnet, dass** die Rastmittel (16, 16') einen Absatz (15) an der Kraftstoffpumpe (9) hintergreifen.

3. Kraftstoffpumpe mit einem Adapter nach einem der vorhergehenden Ansprüche, **dadurch gekennzeichnet, dass** zwei Rastmittel (16, 16') jeweils ein Auslösemittel (17, 17') aufweisen und auf einander gegenüberstehenden Seiten des Anschlussstutzens (11) eingreifen.

4. Kraftstoffpumpe mit einem Adapter nach einem der vorhergehenden Ansprüche, **dadurch gekennzeichnet, dass** der Adapter (12) einen vertikalen Schenkel (19, 32) zur Verbindung mit dem Anschlussstutzen (11) und einen horizontalen Schenkel (20, 33) zur Verbindung mit der Vorlaufleitung (3) hat.

5. Kraftstoffpumpe mit einem Adapter nach Anspruch 4, **dadurch gekennzeichnet, dass** die Auslösemittel (17, 17') bis über den horizontalen Schenkel (20, 33) geführt sind.

6. Kraftstoffpumpe mit einem Adapter nach einem der vorhergehenden Ansprüche, **dadurch gekennzeichnet, dass** der Adapter (12) und ein Rückschlagventil (22, 34) und/oder ein Druckbegrenzungsventil (23) als bauliche Einheit ausgebildet sind.

7. Kraftstoffpumpe mit einem Adapter nach Anspruch 6, **dadurch gekennzeichnet, dass** das Rückschlagventil (22, 34) und das Druckbegrenzungsventil (23) in dem horizontalen Schenkel (20 ,33) des Adapters (12) angeordnet sind.

8. Kraftstoffpumpe mit einem Adapter nach Anspruch 4 und 6, **dadurch gekennzeichnet, dass** an einem Ende des horizontalen Schenkels (20, 33) das Rückschlagventil (22) und an dem anderem Ende das Druckbegrenzungsventil (23) angeordnet ist.

9. Kraftstoffpumpe mit einem Adapter nach einem der Ansprüche 4 bis 8, **dadurch gekennzeichnet, dass** der horizontale Schenkel (20, 33) einen als Ventilsitz ausgebildeten Absatz (27, 39) zur Abstützung eines Ventilkörpers (28) hat.

## Claims

1. Fuel pump (9) for installation inside a fuel container (1), with an adapter (12) for connection to the fuel pump (9) of a section of a feed line (3) located inside the fuel container and leading to an internal combustion engine (4) of the motor vehicle, and with a latching connection (14) for retaining the adapter (12) on a connection piece (11) of the fuel pump (9),
latching means (16, 16') of the latching connection and release means (17, 17') for actuating the latching means (16, 16') being produced integrally with the adapter (12), and the release means (17, 17') can be moved by hand from a position in which the adapter (12) is latched to the connection piece (11) to a position in which the adapter (12) is released from the connection piece (11), **characterized in that** the release means (17, 17') and the latching means (16, 16') have a centrally-retained rocker element (18, 18'), **in that** the latching means (16, 16') project in a hook shape at one end of the rocker element (18, 18') and the release means (17, 17') are arranged at the other end of the rocker element (18, 18'), and **in that** the rocker element (18, 18') is preloaded resiliently to the position in which the adapter (12) is latched to the connection piece (11).

2. Fuel pump with an adapter according to Claim 1, **characterized in that** the latching means (16, 16') engage behind a shoulder (15) on the fuel pump (9).

3. Fuel pump with an adapter according to any one of the preceding claims, **characterized in that** two latching means (16, 16') each have a respective release means (17, 17') and engage in opposite sides of the connection piece (11).

4. Fuel pump with an adapter according to any one of the preceding claims, **characterized in that** the adapter (12) has a vertical member (19, 32) for connection to the connection piece (11) and a horizontal member (20, 33) for connection to the feed line (3).

5. Fuel pump with an adapter according to Claim 4, **characterized in that** the release means (17, 17') extend over the horizontal member (20, 33).

6. Fuel pump with an adapter according to any one of the preceding claims, **characterized in that** the adapter (12) and a non-return valve (22, 34) and/or a pressure-limiting valve (23) are configured as a constructional unit.

7. Fuel pump with an adapter according to Claim 6, **characterized in that** the non-return valve (22, 34) and the pressure-limiting valve (23) are arranged in the horizontal member (20, 33) of the adapter (12).

8. Fuel pump with an adapter according to Claims 4 and 6, **characterized in that** the non-return valve (22) is arranged at one end of the horizontal member (20, 33) and the pressure-limiting valve (23) is arranged at the other end.

9. Fuel pump with an adapter according to any one of Claims 4 to 8, **characterized in that** the horizontal member (20, 33) has a shoulder (27, 39) configured as a valve seat for supporting a valve body (28).

## Revendications

1. Pompe à carburant (9) destinée à être installée dans un réservoir à carburant (1) et comportant un adaptateur (12) pour le raccordement à la pompe à carburant (9) d'une partie, placée à l'intérieur du réservoir à carburant, d'une conduite d'alimentation (3) conduisant à un moteur à combustion interne (4) du véhicule automobile, et un lien encliquetable (14) destiné à maintenir l'adaptateur (12) sur un manchon de raccordement (11) de la pompe à carburant (9), où des moyens d'encliquetage (16, 16') du lien encliquetable et des moyens de libération (17, 17') permettant d'actionner les moyens d'encliquetage (16, 16') sont fabriqués en une seule pièce avec l'adaptateur (12) et où les moyens de libération (17, 17') peuvent être manoeuvrés à la main d'une position de l'adaptateur (12), où il est encliqueté avec le manchon de raccordement (11), en une position libérée du manchon de raccordement (11), ladite pompe à carburant **caractérisée par le fait que** les moyens de libération (17, 17') et les moyens d'encliquetage (16, 16') comportent un organe basculant (18, 18') maintenu en son centre et que, à l'une des extrémités de l'organe basculant (18, 18'), les moyens d'encliquetage (16, 16') dépassent sous forme de crochets et, à l'autre extrémité de l'organe basculant (18, 18'), sont disposés les moyens de libération (17, 17') et que l'organe basculant (18, 18') est maintenu d'une façon élastique par une force de contrainte dans la position de l'adaptateur (12) où il est encliqueté avec le manchon de raccordement (11).

2. Pompe à carburant comportant un adaptateur selon la revendication 1, **caractérisée par le fait que** les moyens d'encliquetage (16, 16') agrippent par l'arrière une collerette (15) sur la pompe à carburant (9).

3. Pompe à carburant comportant un adaptateur selon l'une des revendications précédentes, **caractérisée par le fait que** deux moyens d'encliquetage (16, 16') comportent chacun un moyen de libération (17, 17') et interviennent sur des côtés se faisant face du manchon de raccordement (11).

4. Pompe à carburant comportant un adaptateur selon l'une des revendications précédentes, **caractérisée par le fait que** l'adaptateur (12) a une branche verticale (19, 32) pour la liaison avec le manchon de raccordement (11) et une branche horizontale (20, 33) pour la liaison avec la conduite d'alimentation (3).

5. Pompe à carburant comportant un adaptateur selon la revendication 4, **caractérisée par le fait que** les moyens de libération (17, 17') s'étendent jusqu'au-dessus de la branche horizontale (20, 33).

6. Pompe à carburant comportant un adaptateur selon l'une des revendications précédentes, **caractérisée par le fait que** l'adaptateur (12) et une soupape de retenue (22, 34) et/ou une soupape de limitation de pression (23) sont conçus en tant qu'unité constructive.

7. Pompe à carburant comportant un adaptateur selon la revendication 6, **caractérisée par le fait que** la soupape de retenue (22, 34) et la soupape de limitation de pression (23) sont disposées dans la branche horizontale (20, 33) de l'adaptateur (12).

8. Pompe à carburant comportant un adaptateur selon la revendication 4 et 6, **caractérisée par le fait que** la soupape de retenue (22) est placée à une extrémité de la branche horizontale (20, 33) et la soupape de limitation de pression (23) à l'autre extrémité.

9. Pompe à carburant comportant un adaptateur selon l'une des revendications 4 à 8, **caractérisée par le fait que** la branche horizontale (20, 33) a une collerette (27, 39) ménagée en tant que siège de soupape pour servir d'appui à un corps de soupape (28).
